# FASCICULE DE BREVET EUROPEEN

(11) **EP 2 164 673 B1**
(45) Date de publication et mention de la délivrance du brevet: **02.01.2013**
(21) Numéro de dépôt: 08805764.1
(22) Date de dépôt: 07.05.2008
(51) Int. Cl.: B23K 26/24, B23K 26/32, B23K 26/42, B23K 26/08, B23K 26/06, B23K 26/22

(54) **PROCEDE DE SOUDAGE AU LASER D'ELEMENTS METALLIQUES AVEC CREATION DE PLUSIEURS SAILLIES PAR LASER A L'INTERFACE ENTRE LES ELEMENTS**
LASERSCHWEISSVERFAHREN VON METALLISCHEN KOMPONENTEN MIT MEHREREN DURCH LASER HERGESTELLTEN VORSPRÜNGEN IN DER SCHNITTSTELLE ZWISCHEN BEIDEN KOMPONENTEN
LASER WELDING PROCESS FOR WELDING METAL COMPONENTS, PRODUCING A PLURALITY OF PROJECTIONS BY MEANS OF A LASER AT THE INTERFACE BETWEEN THE COMPONENTS

(30) Priorité: 11.05.2007 FR 0755029
(43) Date de publication de la demande: 24.03.2010
(73) Titulaire: Peugeot Citroën Automobiles SA, 78140 Vélizy-Villacoublay (FR); Institut Maupertuis, 35170 Bruz (FR)
(72) Inventeur: LEFRANC, Bastien, F-35310 Chavagne (FR); LEMAITRE, David, F-35136 SAINT JACQUES DE LA LANDE (FR)
(74) Mandataire: Ménès, Catherine
(86) Numéro de dépôt international: PCT/FR2008/050815
(87) Numéro de publication internationale: WO 2008/149008

(56) Documents cités:
- WO-A-99/08829
- DE-A1- 10 243 005
- JP-A- 53 094 240
- US-A- 5 938 948

## Description

La présente invention concerne un procédé de soudage d'au moins deux éléments métalliques entre eux au moyen d'un faisceau laser conformément au préambule de la revendication 1 (voir, par example, JP 531094240).

Dans un procédé de ce type, l'espacement entre les éléments métalliques est nécessaire pour permettre aux gaz produits lors du soudage d'être évacués correctement d'entre les éléments métalliques.

Le brevet JP 53 094240 se rapporte à un procédé de mise en oeuvre d'une saillie, par un faisceau laser, entre deux éléments métalliques, cette saillie de matériau en fusion étant destinée à relier ces deux éléments.

Le brevet WO 99/08829 divulgue un procédé de mise en oeuvre de saillies entre deux éléments métalliques, de façon à créer des espaces entre ces deux éléments lorsque ceux-ci sont mis au contact l'un de l'autre, ces espaces étant destinés à évacuer les gaz accumulés lors de la phase de soudage entre ces deux éléments.

Dans le procédé décrit dans ce document, les saillies sont donc réalisées après le positionnement des éléments métalliques entre eux et avant leur plaquage. Un tel procédé est peu pratique car les saillies sont réalisées sur un élément métallique seul sans connaître le positionnement exact de l'élément métallique auquel il doit être soudé et donc la zone dans laquelle le soudage va être réalisé, ce qui peut entraîner une disposition approximative des saillies.

Un but de l'invention est de proposer un procédé de soudage du type décrit ci-dessus dans lequel les saillies d'un élément métallique sont disposées de façon précise par rapport la zone de soudage des éléments métalliques.

A cet effet, l'invention concerne un procédé de soudage tel que défini dans la revendication 1.

Ainsi, les éléments métalliques étant préalablement positionnés l'un par rapport à l'autre, la zone de soudage est clairement identifiée, ce qui permet de prévoir précisément l'emplacement des saillies.

De plus, le procédé permet de gagner du temps car les saillies sont réalisées puis le soudage est effectué ce qui évite d'interrompre le fonctionnement du laser par un positionnement de l'élément métallique à souder.

Les saillies étant réalisées au moyen du faisceau laser, aucun élément mécanique (élément d'emboutissage par exemple) susceptible de s'user n'est nécessaire. De plus, l'intégralité du procédé peut être réalisée dans une cabine de soudage au moyen d'une seule source de laser.

Selon d'autres modes de réalisation, le procédé de soudage possède une ou plusieurs des caractéristiques suivantes, prise(s) isolément ou selon toutes les combinaisons techniquement possibles :
- la saillie est réalisée au moyen d'une impulsion laser suffisamment courte pour arrêter la fusion de l'élément métallique dans une phase d'expansion de matière ;
- l'impulsion laser et le faisceau laser sont créés par une tête de soudage, ladite tête de soudage étant mobile en translation selon une direction longitudinale parallèle aux éléments métalliques, ladite tête de soudage émettant régulièrement une impulsion laser au cours de son déplacement de sorte à créer des saillies espacées selon la direction longitudinale sur la face inférieure de l'élément métallique supérieur ;
- les élément métalliques sont plaqués les uns contre les autres préalablement au soudage au moyen du faisceau laser ; et

D'autres aspects et avantages de l'invention apparaîtront à la lecture de la description qui suit, donnée à titre d'exemple, et faite en référence aux dessins annexés, sur lesquels :
- la Fig. 1 est une représentation schématique en coupe de deux éléments métalliques positionnés l'un par rapport à l'autre dans une zone de soudage préalablement au soudage, agent non courant par la présente invention,
- la Fig. 2 est une représentation schématique en coupe des éléments métalliques de la Fig. 1, lors de la réalisation de saillies sur la face d'un de ces éléments métalliques, agent non courant par la présente invention,
- la Fig. 3 est une représentation schématique en coupe des éléments métalliques de la Fig. 2 lors du soudage de ces éléments entre eux , agent non courant par la présente invention,
- la Fig. 4 est une représentation schématique en coupe des éléments métalliques de la Fig 1, lors de la réalisation de saillies sur les deux faces d'un des éléments métalliques selon un premier mode de réalisation de la présente invention,
- la Fig. 5 est une représentation schématique en coupe des éléments métalliques de la Fig. 4, un élément métallique additionnel étant positionné sur ces éléments métalliques,
- la Fig. 6 est une représentation schématique en coupe des éléments métalliques de la Fig. 5 lors du soudage de ces éléments entre eux,
- la Fig. 7 est une représentation schématique en coupe des éléments métalliques de la Fig. 1, lors de la réalisation de saillies sur les deux faces d'un des éléments métalliques selon un deuxième mode de réalisation de la présente invention.
- la Fig. 8 est une représentation schématique en coupe des éléments métalliques de la Fig. 7, un élément métallique additionnel étant positionné sur ces éléments métalliques,
- la Fig. 9 est une représentation schématique en coupe des éléments métalliques de la Fig. 8 lors du soudage de ces éléments entre eux.

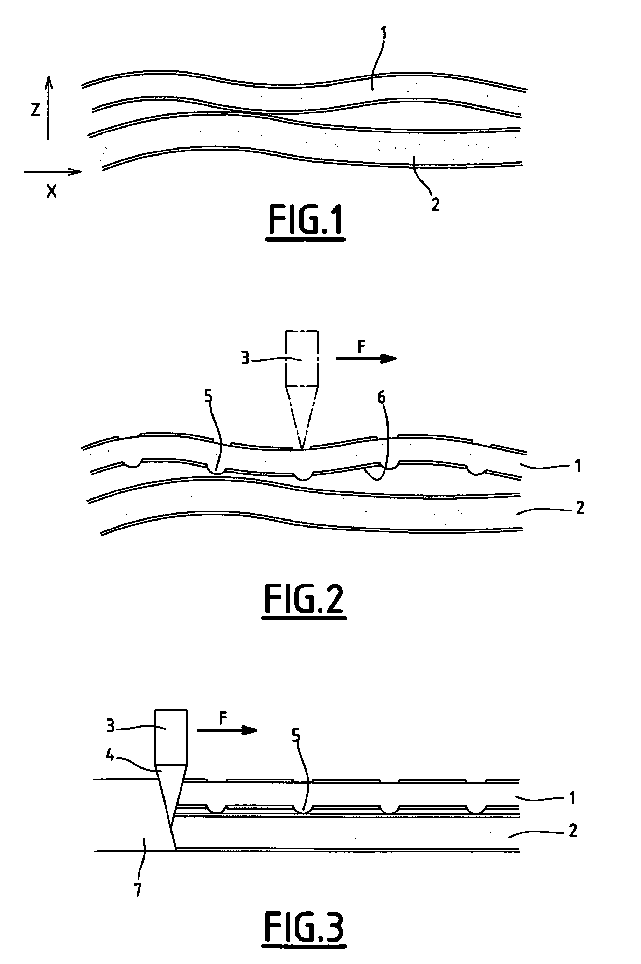

Dans la description, les termes « supérieur » et « inférieur » sont définis par rapport à l'axe Z représenté sur la Fig. 1 et le terme « longitudinal » est défini par rapport à l'axe X de cette figure.

Le procédé de l'invention s'applique à des éléments métalliques du type tôles, par exemple revêtues par une couche de revêtement du type couche antirouille ou similaire. Le procédé s'applique par exemple au soudage de parties d'éléments ouvrants du type capot, volet, coffre, porte ou de parties de caisse d'un véhicule automobile.

Au cours d'une première étape, un procédé, non convient par la présente invention prévoit le positionnement d'un élément métallique supérieur 1 sur un élément métallique inférieur 2 en superposant ces éléments métalliques 1 et 2 au moins dans une zone de soudage, comme représenté sur la Fig. 1. La zone de soudage est la zone où l'on prévoit de réaliser le soudage d'un élément métallique sur l'autre élément métallique en créant un cordon de soudage assurant une continuité métallurgique entre les deux éléments métalliques. Dans le cas de tôles métalliques, il est possible d'avoir des éléments métalliques gondolés, comme représenté sur la Fig. 1. Selon une réalisation non représentée, les éléments métalliques 1 et 2 sont positionnés l'un par rapport à l'autre et sont en outre pré assemblés, par exemple par des moyens de fixation mécaniques.

Les éléments métalliques 1 et 2 sont disposés sous une tête de soudage 3 comprenant une source laser apte à émettre un faisceau laser 4 qui est configuré de façon à frapper l'élément métallique supérieur 1 de façon ponctuelle, comme représenté sur la Fig. 2. Le laser utilisé a par exemple une longueur d'onde de 1030 nm, une puissance de 4000 W. Le faisceau est par exemple transporté par une fibre optique et la focale employée est de 200 mm. La tête de soudage est par exemple placée à une distance de 20 mm de l'élément métallique supérieur 1. La tête de soudage et les éléments métalliques 1 et 2 sont placés dans une cabine de soudage connue classique pour les procédés de soudage au laser.

Dans un premier temps, la tête de soudage 3 est commandée pour émettre des impulsions laser courtes sur l'élément métallique supérieur 1.

Selon un premier mode, l'impulsion laser est agencée pour former des saillies 5 sur la face inférieure 6 de l'élément métallique supérieur 1. La face inférieure 6 est la face qui est disposée en regard de l'élément métallique inférieur 2 lorsque les éléments métalliques sont positionnés l'un par rapport à l'autre. L'impulsion laser permet de déclencher ponctuellement la fusion du matériau de l'élément métallique supérieur 1, ce qui provoque l'expansion du matériau. L'impulsion est toutefois suffisamment courte pour arrêter la fusion dans cette phase d'expansion de sorte à créer une saillie 5 sur la surface de la face inférieure 6, comme représenté sur la Fig. 2. La saillie 5 permet d'assurer un jeu entre l'élément métallique supérieur 1 et l'élément métallique inférieur 2 lorsque ces éléments 1 et 2 sont plaqués l'un contre l'autre. Pour une épaisseur de l'élément métallique 1 de 1,17 mm, la durée d'une impulsion laser est par exemple de 170 ms dans ce premier mode de réalisation.

La tête de soudage 3 est montée mobile en translation selon la direction longitudinale dans la cabine de soudage, comme représenté par la flèche F de la Fig. 2, et est commandée pour émettre des impulsions laser à intervalles réguliers. De la sorte, une pluralité de saillies 5 sont formées sur la face inférieure 6 de l'élément métallique supérieur 1, ces saillies 5 étant espacées les unes des autres selon la direction longitudinale. On crée ainsi dans la zone de soudage un écartement entre l'élément métallique supérieur 1 et l'élément métallique inférieur 2.

Lorsque les saillies 5 ont été formées, les éléments métalliques supérieur 1 et inférieur 2 sont plaqués l'un contre l'autre par des moyens de plaquage (non représentés). Un jeu est maintenu entre les éléments métalliques supérieur 1 et inférieur 2 dans la zone de soudage du fait de la présence des saillies 5.

La tête de soudage 3 est ramenée dans sa position initiale (avant sa translation suivant la direction longitudinale) et est commandée pour émettre le faisceau laser (continu ou impulsionnel) permettant le soudage des éléments métalliques 1 et 2. Le déplacement de la tête de soudage 3 selon la direction longitudinale permet de créer un cordon de soudage 7 selon cette direction. Le gaz, par exemple des vapeurs de zinc, dégagé lors du soudage est évacué grâce au jeu maintenu entre les éléments métalliques 1 et 2 et on obtient un cordon de soudage de bonne qualité.

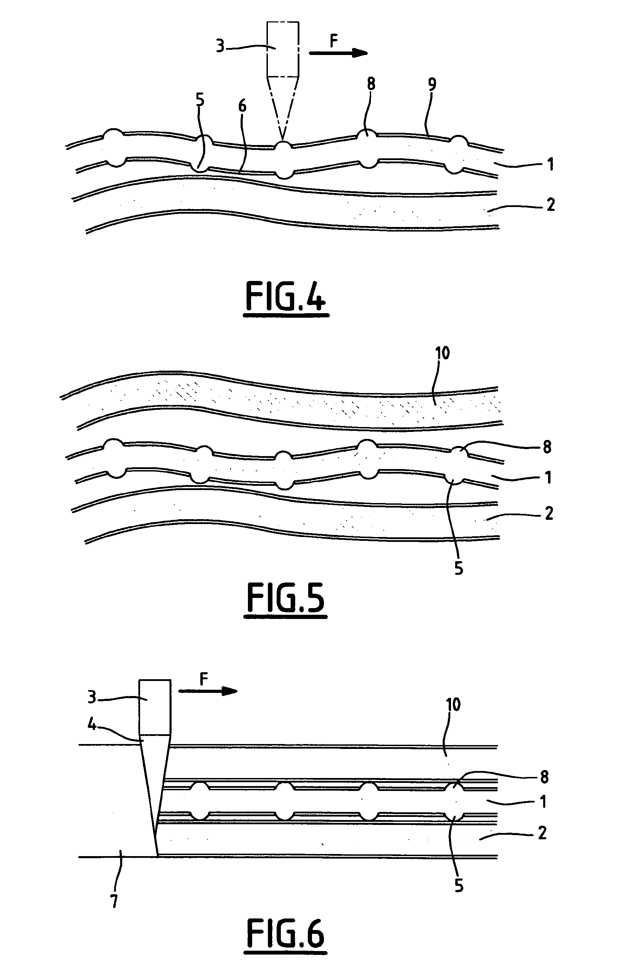

Selon un premier mode de réalisation, selon l'invention, l'impulsion laser est agencée pour former des saillies 5 et 8 en même temps sur la face inférieure 6 et sur la face supérieure 9 de l'élément métallique supérieur 1. Selon ce mode de réalisation, on crée ainsi des saillies 5 et 8 disposées en regard l'une de l'autre sur la face inférieure 6 et la face supérieure 9 de l'élément métallique supérieur 1, respectivement, comme représenté sur la Fig. 4. Pour une épaisseur de l'élément métallique 1 de 0,77 mm, la durée d'une impulsion laser est par exemple de 80 ms dans ce deuxième mode de réalisation.

La tête de soudage 3 étant mobile en translation selon la direction longitudinale, on obtient un résultat similaire que dans le premier mode de réalisation, à savoir des saillies 5 et 8 espacées les unes des autres selon la direction longitudinale sur la face inférieure 6 et la face supérieure 9 de l'élément métallique supérieur 1.

Un tel mode de réalisation permet d'ajouter un élément métallique additionnel 10 que l'on positionne sur la face supérieure 9 de l'élément métallique supérieur 1 dans la zone de soudage après que les saillies 8 ont été réalisées sur cette face supérieure 9, comme représenté sur la Fig. 5.

Après le positionnement de l'élément métallique additionnel 10, on plaque les éléments métalliques 1, 2 et 10 les uns sur les autres, un jeu étant maintenu respectivement entre l'élément métallique inférieur 2 et l'élément métallique supérieur 1 et entre l'élément métallique supérieur 1 et l'élément métallique additionnel 10 par les saillies 5 et 8.

La soudure des trois éléments métalliques 1, 2 et 10 est ensuite réalisée comme représenté sur la Fig. 6, de la même manière que dans le premier mode de réalisation de sorte à permettre le soudage de trois éléments métalliques entre eux au moyen d'un cordon de soudage 7.

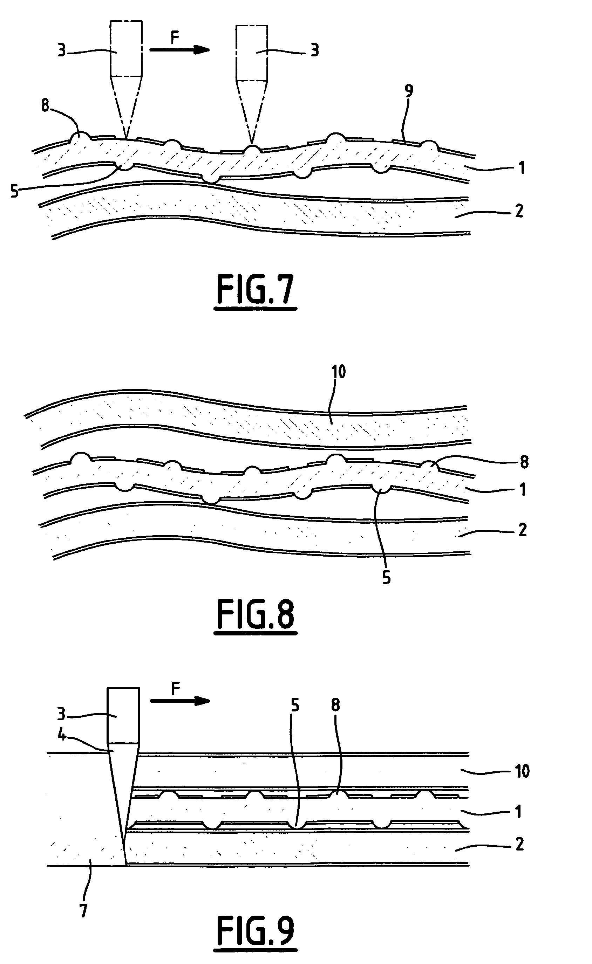

Selon un deuxième mode de réalisation, selon l'invention, la tête de soudage 3 est mobile en translation selon la direction longitudinale et l'impulsion laser est agencée pour créer une saillie 8 sur la face supérieure 9 de l'élément métallique supérieur 1 puis une saillie 5 sur la face inférieure 6 de l'élément métallique supérieur 1 lors du déplacement de la tête de soudage 3, comme représenté sur la Fig. 7. On crée ainsi alternativement des saillies 8 sur la face supérieure 9 et des saillies 5 sur la face inférieure 6 de l'élément métallique supérieur 1 espacées selon la direction longitudinale. Selon ce troisième mode de réalisation et pour une épaisseur de 1,17 mm de l'élément métallique supérieur 1, la durée de l'impulsion laser est par exemple de 60 ms pour créer une saillie 8 sur la face supérieure 9 et de 170 ms pour créer une saillie 5 sur la face inférieure 6 de l'élément métallique 1.

Comme dans le premier mode de réalisation selon l'invention, ce deuxième mode de réalisation selon l'invention permet d'ajouter un élément métallique additionnel 10 que l'on positionne sur la face supérieure 9 de l'élément métallique supérieur 1 dans la zone de soudage après que les saillies 8 ont été réalisées sur cette face supérieure 9, comme représenté sur la Fig. 8.

La suite du procédé est similaire à celui décrit pour le premier mode de réalisation selon l'invention.

Le procédé selon l'invention est également applicable à un plus grand nombre d'éléments métalliques en prévoyant de réaliser des saillies sur les faces des éléments métalliques qui se trouvent en regard d'autres éléments métalliques.

## Revendications

1. Procédé de soudage d'au moins deux éléments métalliques (1, 2) entre eux au moyen d'un faisceau laser (4), dans lequel les éléments métalliques (1, 2) sont superposés l'un sur l'autre au moins dans une zone de soudage et écartés l'un de l'autre par une pluralité de saillies (5) espacées les unes des autres prévues sur au moins l'un des deux éléments métalliques (1, 2), ledit procédé étant **caractérisé en ce qu'**il comprend, dans l'ordre chronologique, les étapes suivantes : I
- positionner un élément métallique supérieur (1) sur un élément métallique inférieur (2) en les superposant au moins dans une zone de soudage,
- réaliser une pluralité de saillies (5) sur la face inférieure (6) de l'élément métallique supérieur (1) faisant face à l'élément métallique inférieur (2) au moyen d'impulsions laser appliquées ponctuellement sur ledit élément métallique supérieur (1), lesdites saillies (5) étant espacées les unes des autres et espaçant l'élément métalliques supérieur (1) de l'élément métallique inférieur (2), et réaliser une pluralité de saillies (8) sur la face supérieure (9) de l'élément métallique (1) supérieur
• soit en même temps que les saillies (5) sur la face inférieure (6) dudit élément métallique (1), au moyen d'impulsions laser appliquées ponctuellement sur ledit élément métallique supérieur, lesdites saillies (5, 8) étant disposées l'une en regard de l'autre,
• soit en agençant l'impulsion laser pour créer une saillie (8) sur la face supérieure (9) de l'élément métallique supérieur (1) puis une saillie (5) sur la face inférieure (6) de l'élément métallique supérieur (1) lors du déplacement de la tête de soudage (3) de sorte à créer des saillies (5, 8) espacées selon la direction longitudinale alternativement sur la face supérieure (9) et sur la face inférieure (6) de l'élément métallique supérieur (1),
- positionner un élément métallique additionnel (10) sur la face supérieure (9) de l'élément métalliques supérieur (1), les éléments métalliques 1, 2, 10) étant revêtus par une couche de revêtement préalablement à leur positionnement,
- souder les trois éléments métalliques (1, 2, 10) entre eux dans la zone de soudage au moyen du faisceau laser (4), ledit élément métallique additionnel (10) étant espacé de l'élément métallique supérieur (1) par les saillies (8) sur la face supérieure (9) de celui-ci.

2. Procédé de soudage selon la revendication 1, **caractérisé en ce que** la saillie (5) est réalisée au moyen d'une impulsion laser suffisamment courte pour arrêter la fusion de l'élément métallique dans une phase d'expansion de matière.

3. Procédé de soudure selon la revendication 1 ou 2, **caractérisé en ce que** l'impulsion laser et le faisceau laser (4) sont créés par une tête de soudage (3), ladite tête de soudage (3) étant mobile en translation selon une direction longitudinale parallèle aux éléments métalliques (1, 2), ladite tête de soudage (3) émettant régulièrement une impulsion laser au cours de son déplacement de sorte à créer des saillies (5) espacées selon la direction longitudinale sur la face inférieure (6) de l'élément métalliques supérieur (1).

4. Procédé de soudage selon l'une quelconque des revendications 1 à 3, **caractérisé en ce que** les élément métalliques (1, 2, 10) sont plaqués les uns contre les autres préalablement au soudage au moyen du faisceau laser (4).

## Claims

1. A welding process of at least two metal components (1, 2) with one another by means of a laser beam (4), in which the metal components (1, 2) are superimposed one on the other at least in a welding zone and separated from one another by a plurality of projections (5), which are spaced apart from one another, provided on at least one of the two metal components (1, 2), the said process being **characterized in that** it includes, in chronological order, the following steps:
- positioning an upper metal component (1) on a lower metal component (2) by superimposing them at least in a welding zone,
- realizing a plurality of projections (5) on the lower face (6) of the upper metal component (1) facing the lower metal component (2) by means of laser pulses applied in a punctiform manner on the said upper metal component (1), the said projections (5) being spaced apart from one another and spacing apart the upper metal component (1) from the lower metal component (2), and realizing a plurality of projections (8) on the upper face (9) of the upper metal component (1)
■ either at the same time as the projections (5) on the lower face (6) of the said metal component (1), by means of laser pulses applied in a punctiform manner on the said upper metal component, the said projections (5, 8) being disposed one facing the other,
■ or by arranging the laser pulse to create a projection (8) on the upper face (9) of the upper metal component (1) then a projection (5) on the lower face (6) of the upper metal component (1) during the movement of the welding head (3) so as to create projections (5, 8) which are spaced apart along the longitudinal direction alternately on the upper face (9) and on the lower face (6) of the upper metal component (1),
- positioning an additional metal component (10) on the upper face (9) of the upper metal component (1), the metal components (1, 2, 10) being covered by a covering layer prior to their positioning,
- welding the three metal components (1, 2, 10) with one another in the welding zone by means of the laser beam (4), the said additional metal component (10) being spaced apart from the upper metal component (1) by the projections (8) on the upper face (9) thereof.

2. The welding process according to Claim 1, **characterized in that** the projection (5) is realized by means of a sufficiently short laser pulse to stop the fusion of the metal component in a material expansion phase.

3. The welding method according to Claim 1 or 2, **characterized in that** the laser pulse and the laser beam (4) are created by a welding head (3), the said welding head (3) being movable in translation along a longitudinal direction parallel to the metal components (1, 2), the said welding head (3) regularly emitting a laser pulse during its movement so as to create projections (5) which are spaced apart along the longitudinal direction on the lower face (6) of the upper metal component (1).

4. The welding method according to any one of Claims 1 to 3, **characterized in that** the metal components (1, 2, 10) are placed against one another prior to the welding by means of the laser beam (4).

## Patentansprüche

1. Verfahren zum Schweißen mindestens zweier metallischer Elemente (1, 2) untereinander mittels eines Laserstrahls (4), bei dem die metallischen Elemente (1, 2) aufeinander mindestens in einem Schweißbereich überlagert und voneinander durch eine Vielzahl von Vorsprüngen (5), die voneinander beabstandet sind, die auf mindestens einem der metallischen Elemente (1, 2) vorgesehen sind, abgespreizt sind, wobei das Verfahren **dadurch gekennzeichnet ist, dass** es in chronologischer Reihenfolge die folgenden Schritte aufweist:
- Positionieren eines oberen metallischen Elements (1) auf einem unteren metallischen Element (2), indem sie in mindestens einem Schweißbereich überlagert werden,
- Ausführen einer Vielzahl von Vorsprüngen (5) und auf der unteren Seite (6) des oberen metallischen Elements (1), das dem unteren metallischen Element (2) gegenüberliegt, mittels Laserimpulsen, die stellenweise auf dem oberen metallischen Element (1) angewandt werden, wobei die Vorsprünge (5) voneinander beabstandet sind und das obere metallische Element (1) von dem unteren metallischen Element (2) abspreizen, und Herstellen einer Vielzahl von Vorsprüngen (8) auf der oberen Seite (9) des oberen metallischen Elements (1)
• entweder gleichzeitig mit den Vorsprüngen (5) auf der unteren Seite (6) des metallischen Elements (1) mittels Laserimpulsen, die stellenweise auf dem oberen metallischen Element angewandt werden, wobei die Vorsprünge (5, 8) einander gegenüber angeordnet sind,
• oder durch Anordnen des Laserimpulses, um einen Vorsprung (8) auf der oberen Seite (9) des oberen metallischen Elements (1) und dann einen Vorsprung (5) auf der unteren Seite (6) des oberen metallischen Elements (1) bei dem Verlagern des Schweißkopfs (3) derart zu schaffen, dass Vorsprünge (5, 8) geschaffen werden, die entlang der Längsrichtung, abwechselnd auf der oberen Seite (9) und auf der unteren Seite (6) des oberen metallischen Elements (1) beabstandet sind,
- Positionieren eines zusätzlichen metallischen Elements (10) auf der oberen Seite (9) des oberen metallischen Elements (1), wobei die metallischen Elemente (1, 2, 10) vor ihrem Positionieren durch eine Beschichtungsschicht beschichtet werden,
- Schweißen der drei metallischen Elemente (1, 2, 10) untereinander in dem Schweißbereich mittels des Laserstrahls (4), wobei das zusätzliche metallische Element (10) von dem oberen metallischen Element (1) durch die Vorsprünge (8) auf der oberen Seite (9) dieses beabstandet ist.

2. Schweißverfahren nach Anspruch 1, **dadurch gekennzeichnet, dass** der Vorsprung (5) mittels eines Laserimpulses hergestellt wird, der ausreichend kurz ist, um das Schmelzen des metallischen Elements in einer Werkstoffausdehnungsphase zu stoppen.

3. Schweißverfahren nach Anspruch 1 oder 2, **dadurch gekennzeichnet, dass** der Laserimpuls und der Laserstrahl (4) durch einen Schweißkopf (3) geschaffen werden, wobei der Schweißkopf (3) in Verschiebung entlang einer Längsrichtung parallel zu den metallischen Elementen (1, 2) beweglich ist, wobei der Schweißkopf (3) regelmäßig einen Laserimpuls während seiner Bewegung derart ausgibt, dass er Vorsprünge (5) schafft, die entlang der Längsrichtung auf der unteren Seite (6) des oberen metallischen Elements (1) beabstandet sind.

4. Schweißverfahren nach einem der Ansprüche 1 bis 3, **dadurch gekennzeichnet, dass** die metallischen Elemente (1, 2, 10) vor dem Schweißen mit dem Laserstrahl (4) gegeneinander gedrückt werden.
